# EUROPÄISCHE PATENTSCHRIFT

(11) **EP 3 477 807 B1**
(45) Veröffentlichungstag und Bekanntmachung des Hinweises auf die Patenterteilung: **13.12.2023**
(21) Anmeldenummer: 18199620.8
(22) Anmeldetag: 10.10.2018
(51) Int. Cl.: H02G 5/04, H02G 5/02, H01R 25/14

(54) **STROMSCHIENENANORDNUNG MIT STROMFÜHRUNGSPROFIL**
BUS BAR ARRANGEMENT WITH CURRENT GUIDING PROFILE
DISPOSITIF DE RAIL CONDUCTEUR AVEC PROFIL D'AMENÉE DE COURANT

(30) Priorität: 27.10.2017 DE 102017125263
(43) Veröffentlichungstag der Anmeldung: 01.05.2019
(73) Patentinhaber: Wago Verwaltungsgesellschaft mbH, 32423 Minden (DE)
(72) Erfinder: BIES, Henryk, 04249 Leipzig (DE); GASSAUER, Stephan, 99768 Ilfeld (DE)
(74) Vertreter: Kröncke, Rolf

(56) Entgegenhaltungen:
- WO-A1-01/91250
- CN-A- 103 318 056
- DE-C1- 3 311 362
- FR-A1- 2 432 756
- US-A- 5 618 192
- US-A1- 2011 261 508

## Beschreibung

Die Erfindung betrifft eine Stromschienenanordnung mit einem sich in eine Längserstreckungsrichtung erstreckenden Metalltrog und mit sich ebenso in Längserstreckungsrichtung erstreckenden Stromführungsprofilen, die mehrere Nuten haben, die sich parallel zueinander in Längserstreckungsrichtung erstrecken und seitlich durch Stege und im Nutgrund durch einen die Stege verbindenden Boden begrenzt sind, wobei elektrische Leiter in den Nuten aufgenommen und die Stromführungsprofile in den mittleren Metalltrog eingebaut sind.

Die Erfindung betrifft weiterhin ein Stromführungsprofil mit mehreren Nuten, die sich in eine Längserstreckungsrichtung parallel zueinander erstrecken und seitlich durch Stege und im Nutgrund durch einen die Stege verbindenden Boden begrenzt sind.

Zur Verteilung elektrischer Energien im Gebäude und zum Anschließen von Leuchten an wahlweise ausgewählten Positionen sind solche Stromschienenanordnungen mit Stromführungsprofilen bekannt. Die Stromführungsprofile haben einen kammartigen Quersteg mit Stegen und hierdurch gebildeten Nuten sowie in den Nuten aufgenommene elektrische Leiter. Bei solchen Stromführungsprofilen werden diese elektrischen Leiter in die Nuten eingebaut und können von einem Abgriffsteckverbinder mit in die Nuten hineinragenden Kontakten elektrisch leitend kontaktiert werden. Hierzu sind die elektrischen Leiter in der Regel nicht isoliert und beispielsweise als starre Stromschienenstäbe ausgebildet. Die Stromführungsprofile haben in der Regel ein aus Kunststoffmaterial gebildetes Trägerprofil, das in einen Metalltrog eingebaut wird. Sie haben eine relativ große Erstreckungslänge in Längserstreckungsrichtung. Bei der üblichen thermischen Belastung dehnen sich die aus Metall gebildeten elektrischen Leiter, der Metalltrog und das aus Kunststoff gebildete Trägerprofil, d.h. das Stromführungsprofil, unterschiedlich aus. Hierdurch kann es zu signifikanten Längenänderungen bzw. Längenverschiebungen während des Betriebes kommen.

Dies ist insbesondere relevant, wenn mehrere Stromführungsprofile in einer Flucht hintereinander angeordnet und die darin eingelegten elektrischen Leiter mit Stecckontakten elektrisch leitend miteinander verbunden werden sollen.

DE 10 2011 056 043 B4 offenbart ein Stromschienensystem mit einem Stromführungsprofil und einem Stromabgriffelement, das auf das Stromführungsprofil aufgesetzt wird. Eine elektrische Verbindung von hintereinander angeordneten Stromführungsprofilen lässt sich durch fliegende elektrische Leiter realisieren, die an solche Stromabgriffelemente angeklemmt werden. Durch die Flexibilität der elektrischen Leiter wird der notwendige Längenausgleich zwischen den Stromführungsprofilen und den darin eingebauten elektrischen Leitern bei Wärmeausdehnung sichergestellt. Eine solche Anordnung trägt allerdings hoch auf.

EP 1 284 033 B1 zeigt ein Stromführungsprofil mit einem Drahthalterungselement mit Nuten, in welche elektrische Drähte aufgenommen sind. Die Drahthalterungselemente haben an ihren Enden Vorsprünge, welche bei zwei zusammengeführten Drahthalterungselementen überlappend ineinandergreifen. Die Vorsprünge bilden dabei im Übergangsbereich zweier Drahthalterungselemente einen zusammengesetzten Kanal für den Draht und erlauben einen beispielsweise temperaturbedingten Längenausgleich der Drahthalterungselemente zueinander.

CN 103318056 A betrifft eine Leiterhalterung, die in eine Trag- und Führungsschiene für einen Schlitten oder Aufzug eingeclipst und mit dieser verschraubt werden kann. Die Leiterhalterung weist Stege zur abschnittsweisen Führung der längsverschieblich in der Leiterhalterung angeordneten Leiter auf. Um zu verhindern, dass sich die Leiterhalterung ebenfalls entlang der Schiene bewegt, wird die Leiterhalterung mit Feststellschrauben an je einem Ende der Halterung an der Schiene fixiert.

DE 3311362 C1 offenbart eine Leiterhalterung für Schleifleitungen zur Stromzufuhr zu Kranen und Hängebahnen. Die Halterung weist einen scharnierartig ein- und ausschwenkbaren Klapparm auf, um die Bestückung der Halterung mit Leitern zu erleichtern. Die Fixierung des Klapparms an einem Haltearm der Halterung erfolgt über Spreizstifte an dem Haltearm mit korrespondierenden Spreizdornen an dem Klapparm.

WO 01/91250 A1 zeigt ein Stromschienensystem für Leuchten mit mehreren modular miteinander verbindbaren Tragschienen sowie einem von den Tragschienen gehaltenen Stromleitprofil. Dieses weist in Längsrichtung der Tragschienen verlaufende und von einer Kontaktierungsseite her zugängliche Nuten zur Aufnahme von Drähten für die Stromversorgung oder Übertragung von Steuersignalen auf. Das Stromleitprofil ist in Führungsnuten der Tragschienen formschlüssig aufgenommen.

US 2011/0261508 A1 beschreibt eine Sammelschienenanordnung und eine Stromschiene. Die Sammelschienenanordnung hat eine innere Komponente und eine diese umgebende äußere Komponente, die über eine Steckeinheit miteinander verbunden werden. Ein Stromleitprofil ist in Führungsnuten der Sammelschienenanordnung formschlüssig aufgenommen.

FR 2 432 756 A1 betrifft ein Stromführungsprofil für Stromschienen. Damit die von dem Stromführungsprofil aufgenommenen Leiter bei einer Wärmeausdehnung nicht knicken, bildet das Profil lediglich Führungen am Umfang der Leiter, sodass sich diese innerhalb der Führung ungehindert in Längsrichtung ausdehnen und zusammenziehen können. Damit auch das Stromführungsprofil und die Tragschiene sich bei einer jeweiligen Wärmeausdehnung nicht gegenseitig behindern, weist das Stromführungsprofil auf der von den Leitern abgewandten Seite eine T-förmige Führungsnut auf. Ein beispielsweise als Schraube ausgeführtes Führungselement ist formschlüssig in der Führungsnut aufgenommen und verhindert eine Beweglichkeit des Stromführungsprofils quer zu seiner Längserstreckung. Das Führungselement und die Führungsnut erlauben jedoch zugleich eine Beweglichkeit des Stromführungsprofils in seiner Längserstreckung, um eine etwaige Wärmeausdehnung zuzulassen.

Ausgehend hiervon ist es Aufgabe der vorliegenden Erfindung, eine verbesserte Stromschienenanordnung und ein verbessertes Stromführungsprofil zu schaffen, bei denen bei möglichst einfachem und kompaktem Aufbau unter Berücksichtigung des Längenausgleichs der aneinander- oder aufeinander liegenden Bauteile gut gelagert sind.

Die Aufgabe wird durch die Stromschienenanordnung mit den Merkmalen des Anspruchs 1 gelöst. Vorteilhafte Ausführungsformen sind in den Unteransprüchen beschrieben.

Es wird vorgeschlagen, dass die Stromführungsprofile innerhalb des mittleren Bereichs von 30% bis 70% ihrer Länge und bevorzugt im Bereich von der halben Länge +/- 5% Toleranz durch Formschluss mit dem Metalltrog verbunden sind und an ihren sich an den mittleren Bereich anschließenden Bereichen (die auch als Endbereiche oder Seitenbereiche bezeichnet werden können) in Längserstreckungsrichtung relativ beweglich zum Metalltrog sind. Der Formschluss dient dazu, ein Hin- und Herverschieben des Stromführungsprofils in Längserstreckungsrichtung relativ zum Metalltrog im mittleren Bereich des Stromführungsprofils zu verhindern. Die Stromführungsprofile werden somit an dem als Tragschiene dienenden Metalltrog jeweils in etwa mittig fixiert. Damit können sich die Stromführungsprofile nur jeweils in Richtung ihrer stirnseitigen Enden in Längserstreckungsrichtung ausdehnen, ohne dass die Stromführungsprofile beliebig hin und her verschoben werden. Damit ist der durch Wärmeeinfluss stirnseitig auftretende Längenversatz soweit reduziert, dass unverhältnismäßig große Abstände zwischen in einer Flucht aufeinanderfolgenden Stromführungsprofilen verhindert werden.

Erfindungsgemäß ist im mittleren Bereich nur eine Fixierung mit einem Formschluss vorhanden. Der Formschluss zur Fixierung ist in jedem Stromführungsprofil jeweils axial mittig, d.h. etwa auf der halben Breite der Stromführungsprofile. Damit wird die Gefahr einer Verwindung reduziert.

Der Metalltrog kann eine z.B. aus der Auflageebene des Metalltrogs in Richtung des Stromführungsprofils herausgestellte Prägung haben. Das Stromführungsprofil hat dann eine zum Metalltrog und dessen Prägung hin zugängliche Anschlagmulde, die z.B. zur Auflageebene des Metalltrogs hin zugänglich ist. Die mindestens eine Prägung und die jeweils zugehörige Anschlagmulde sind zur Bildung eines Formschlusses ausgebildet, wenn das Stromführungsprofil in den Metalltrog eingebaut ist. Dabei taucht die Prägung in die zur Auflageebene des Metalltrogs hin zugängliche und zur Aufnahme der Prägung geöffnete Mulde ein. Mit Hilfe dieser in die Anschlagmulde eintauchenden Prägung wird eine Lageverschiebung des Stromführungsprofils im Bereich des Formschlusses relativ zum Metalltrog verhindert. Das Stromführungsprofil kann dabei in Längserstreckungsrichtung verschieblich in den Metalltrog eingerastet und damit vor Herausfallen aus dem Metalltrog gesichert werden. Der Formschluss dient somit nicht notwendigerweise zur Befestigung des Stromführungsprofils an dem Metalltrog.

Das Stromführungsprofil kann aber auch im mittleren Bereich mit dem Metalltrog lösbar oder nicht lösbar verbunden sein. Die Verbindung kann beispielsweise durch Schrauben, Nieten o.ä. hergestellt sein. Damit wird der Formschluss nicht nur zur Verhinderung oder Reduzierung einer Hin- und Herverschiebung des Stromführungsprofils relativ zum Metalltrog in Längserstreckungsrichtung benutzt, sondern auch zur Lagefixierung lotrecht zur Auflageebene des Metalltroges.

Ein Formschluss zur Reduzierung der Hin- und Herverschiebbarkeit des Stromführungsprofils relativ zum Metalltrog in Längserstreckungsrichtung kann auch durch andere geeignete Rastelemente, wie beispielsweise Rastlaschen oder durch Anschlagelemente realisiert werden.

Der Metalltrog kann aber auch eine zum Stromführungsprofil hin offene Anschlagmulde und das Stromführungsprofil eine zum Metalltrog hin herausgestellte Prägung haben. Die Prägung und die Anschlagmulde sind dann zur Bildung eines Formschlusses ausgebildet, wenn das Stromführungsprofil in den Metalltrog eingebaut ist. Die Prägung kann aus der Auflageebene des Stromführungsprofils in Richtung der Auflageebene des Metalltrogs abragen. Somit kann das Anschlagelement auch von dem Stromführungsprofil abragen und in eine Öffnung des Metalltroges eintauchen.

Die Stromführungsprofile können an dem stirnseitigen Endbereich eine Plattform mit einer zur Auflage eines stirnseitigen Endbereichs eines in Längserstreckungsrichtung in einer Flucht angrenzenden weiteren Stromführungsprofils angepassten Kontur haben. Damit wird ein Auflager bereitgestellt, auf dem das angrenzende Stromführungsprofil aufgelagert und hinsichtlich der Lage in der Flucht der Längserstreckungsrichtung positioniert wird.

Die Stromführungsprofile können an ihren diametral gegenüberliegenden Endbereichen einerseits eine Plattform und andererseits eine zur Aufnahme einer solchen Plattform angepasste Vertiefung haben. Damit können die Stromführungsprofile in Längserstreckungsrichtung aneinandergereiht werden, wobei die Stromführungsprofile durch Anlegen des eine Vertiefung aufweisenden Endbereichs auf die Plattform des benachbarten Endbereichs in die quer zur Längserstreckungsrichtung weisenden Richtung relativ zueinander positioniert sind.

Die Stromführungsprofile können aber auch an ihren diametral gegenüberliegenden Endbereichen jeweils eine Plattform zur Auflagerung eines Stromführungsprofil-Verbinders haben. Die in Längserstreckungsrichtung hintereinander angeordneten Stromführungsprofile werden an ihren Stirnseiten und damit nicht direkt miteinander verbunden, sondern mit zwischenliegenden Stromführungsprofil-Verbindern, die Steckkontakte zur elektrisch leitenden Kontaktierung der in den Nuten befindlichen elektrischen Leiter haben.

Die Stromführungsprofile können von den Stegen in eine Nut hineinragende Vorsprünge haben, die zur Lagerung von in den Nuten eingelegten elektrischen Leitern ausgebildet sind. Der Boden kann dann eine zu den Stegen führende Freimachung haben. Diese Vorsprünge sind somit ausgebildet, um einen in die Nut eingelegten elektrischen Leiter zu arretieren, indem sie einen Anschlag für den elektrischen Leiter bilden. In Längserstreckungsrichtung sind in einer Nut in Abständen zueinander solche Vorsprünge vorhanden.

Bei der Ausformung eines solchen Stromführungsprofils im Kunststoff-Spritzguss oder ähnlichem sind Stege mit möglichst gleichbleibender Stegdicke und Nuten mit konstanter Nutbreite erwünscht. Mit Hilfe solcher zu den Stegen führenden Freimachungen, die im Boden direkt angrenzend an die bzw. benachbart zu den Vorsprüngen angeordnet sind, lässt sich ein Formwerkzeug durch die Freimachung zu einer zu bildenden Vertiefung führen.

Solche Freimachungen haben zwar den Nachteil, dass hierdurch die Luft- und Kriechstrecken beeinträchtigt werden. Dies lässt sich aber durch geeignete Konturen so gestalten, dass die Abstände zu den Kriechstrecken zwischen einem elektrischen Leiter durch die Freimachung zu einem weiteren elektrischen Leiter ausreichend groß sind.

Die Vorsprünge können somit durch ein in eine jeweilige Freimachung eintauchendes Formwerkzeug gebildet sein. Zur Herstellung eines Stromführungsprofils beispielsweise aus Polypropylen hat das Formwerkzeug einen die Freimachung und die Vorsprünge bildenden starren oder beweglichen Finger, der bei der Entformung dann aus der Freimachung herausgezogen wird.

Das Stromführungsprofil kann so ausgestaltet sein, dass die benachbarten Nuten unterschiedlich tief sind. Damit werden die Luft- und Kriechstrecken zwischen den benachbarten elektrischen Leitern auf einfache Weise vergrößert.

Von dem Boden der tieferen Nuten können in Längserstreckungsrichtung des Stromführungsprofils sich erstreckende Lagerstege abragen, die eine Auflageebene für einen Metalltrog bilden. Damit gelingt es auch, die Luft- und Kriechstrecke eines elektrischen Leiters durch eine Freimachung zum Metalltrog hin zu vergrößern. Die Lagerstege dienen aber auch der Verbesserung der Stabilität des Stromführungsprofils, ggf. auch zusammen mit optionalen quer zur Längserstreckungsrichtung des Stromführungsprofils ausgerichteten Querstegen. Die Erhöhung der Stabilität ist insbesondere beim Einwirken von durch auf das Stromführungsprofil aufgesetzten Abgriffsteckern einwirkenden Kräften erforderlich, um beispielsweise ein Durchbiegen des Stromführungsprofils zu verhindern.

Denkbar ist aber auch, dass die Freimachungen benachbarter Nuten für die Vorsprünge in Längserstreckungsrichtung versetzt zueinander sind. Damit werden jedenfalls die Luft- und Kriechstrecken zwischen den benachbarten elektrischen Leitern durch die Freimachungen nicht negativ beeinflusst.

Die Erfindung wird nachfolgend anhand von Ausführungsbeispielen mit den beigefügten Zeichnungen näher erläutert. Es zeigen:
- Figur 1 -: Draufsicht auf eine Stromschienenanordnung mit Metalltrog und darin eingebauten Stromführungsprofil;
- Figur 2 -: Seitenansicht der Stromschienenanordnung aus Figur 1;
- Figur 3 -: Schnittansicht eines Stromführungsprofils im Bereich der Freimachungen und der niedrigeren Nuten;
- Figur 4 -: Schnittansicht des Stromführungsprofils im Bereich der Freimachungen der tieferen Nuten.

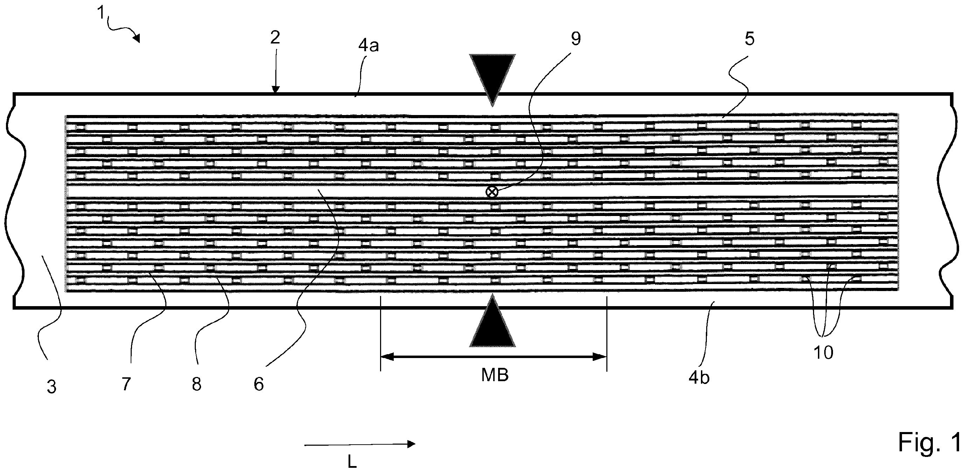

Figur 1 zeigt eine Draufsicht auf eine Stromschienenanordnung 1, die einen sich in eine Längserstreckungsrichtung L erstreckenden Metalltrog 2 hat. Dieser Metalltrog 2 hat eine Auflageebene 3 und von dieser Auflageebene 3 abragende Seitenwände 4a, 4b, zwischen denen mindestens ein Stromführungsprofil 5 eingebaut ist. In einem solchen Metalltrog 2 bzw. in einer Flucht hintereinander angereihten Metalltröge 2 können mehrere Stromführungsprofile 5 in Längserstreckungsrichtung L hintereinander angebracht werden, wobei die in den Stromführungsprofilen 5 enthaltenen elektrischen Leiter jeweils elektrisch leitend miteinander verbunden werden.

Erkennbar ist, dass das Stromführungsprofil 5 eine Bodenfläche, d.h. einen Boden 6 hat, von dem eine Anzahl von sich parallel in Längserstreckungsrichtung L nebeneinander erstreckenden Stegen 7 abragen. Diese ein Paar von solchen Stegen 7 begrenzt jeweils zusammen mit dem Boden 6 eine Nut 8. Der Boden 6 bildet dabei den Nutgrund einer Nut 8. In diese Nuten 8 sind elektrische Leiter eingelegt, die sich in Längserstreckungsrichtung L erstrecken und von den Stirnseiten des Stromführungsprofils 5 so zugänglich sind, dass sie an einen elektrischen Leiter eines folgenden Stromführungsprofils 5 oder mit einem Steckverbinder an eine Zu- oder Ableitung angeschlossen werden können. Solche elektrischen Leiter (nicht dargestellt) können sich aber auch über mehrere in Längserstreckungsrichtung L hintereinander angeordnete Stromführungsprofile 5 durchgängig erstrecken.

Das Stromführungsprofil 5 ist aus einem Isolierstoffmaterial gebildet, wie beispielsweise aus einem Kunststoffmaterial. Geeignet ist hierfür z.B. Polypropylen. Der Metalltrog 2 ist aus einem Blechmaterial gebildet. Während des Betriebs tritt durch Wärmeeinwirkung eine Wärmeausdehnung aus, die aufgrund der unterschiedlichen Materialien des Metalltrogs 2 und des Stromführungsprofils 5 unterschiedlich ist. Dadurch kommt es zu einer Relativverschiebung des Stromführungsprofils 5 zum Metalltrog 2. Diese wirkt sich insbesondere im Anschluss von zwei aufeinanderfolgenden Stromführungsprofilen 5 aus.

Um nun das Spaltmaß zwischen zwei aufeinanderfolgenden Stromführungsprofilen 5 und die Längenausdehnungstoleranz in diesem Übergangsbereich vorhersehbar und möglichst gering zu halten, ist das Stromführungsprofil 5 in seinem mittleren Bereich MB von 30% bis 70% der Länge des Stromführungsprofils 5 durch Formschluss 9 mit dem Metalltrog 2 verbunden. Diese Fixierung des Stromführungsprofils 5 an dem Metalltrog 2, welche eine Hin- und Herverschiebung in Längserstreckungsrichtung L verhindert oder zumindest wesentlich einschränkt, ist mit den Pfeilen angedeutet.

In den sich an dem Formschluss 9 anschließenden Endbereichen, die sich außerhalb des mittleren Bereiches MB befinden, ist das Stromführungsprofil 5 hingegen in Längserstreckungsrichtung L frei beweglich. Damit wird bei der unterschiedlichen Längenausdehnung des Stromführungsprofils 5 von dem Metalltrog 2 verhindert, dass sich unkontrollierte Verformungen durch Verspannung ergeben.

Erkennbar ist weiterhin, dass in den Nuten 8 in regelmäßigen Abständen Freimachungen 10 in den Boden 6, d.h. im Nutgrund, eingebracht sind. Dabei sind die Freimachungen 10 der benachbarten Nuten 8 versetzt zueinander, so dass sich in Längserstreckungsrichtung L gesehen zwischen zwei aufeinanderfolgenden Freimachungen 10 einer Nut 8 in der benachbarten Nut 8 etwa auf halben Abstand des benachbarten Paares von Freimachungen 10 eine Freimachung 10 befindet.

An den Positionen dieser Freimachungen 10 haben die Stege 7 in dem Innenraum der Nut 8 oberhalb der jeweiligen Freimachung 10 Vorsprünge, mit denen ein elektrischer Leiter in der jeweiligen Nut 8 gehalten wird.

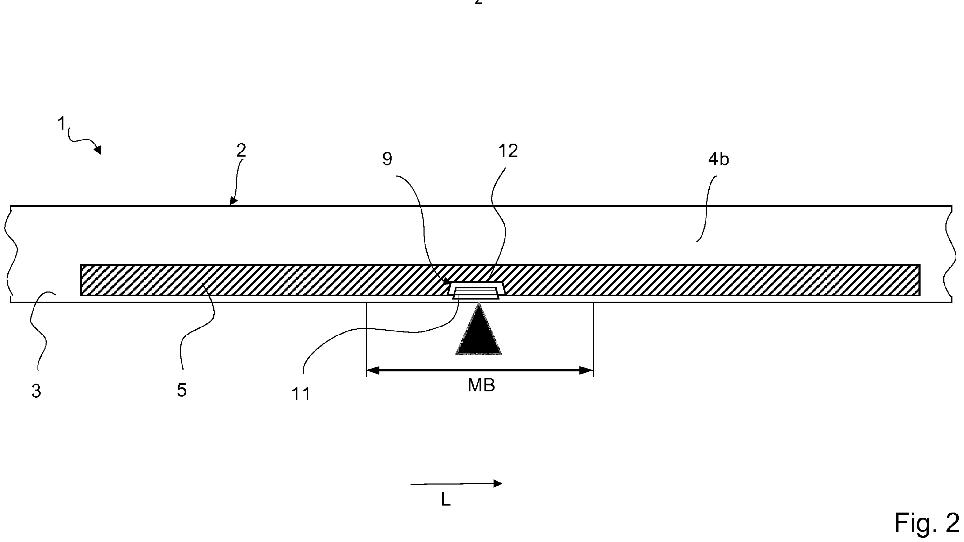

Figur 2 zeigt eine Seitenansicht der Stromschienenanordnung 1 aus Figur 1. Dabei ist zu erkennen, dass das Stromführungsprofil 5 auf der Auflageebene 3 des Metalltrogs 2 flächig aufgelegt ist. Der Formschluss 9 ist bei dieser Ausführungsform dadurch gebildet, dass eine in Richtung des Stromführungsprofils 5 herausgestellte Prägung 11 und das Stromführungsprofil 5 eine zur Auflageebene 3 des Metalltrogs 2 hin zugängliche Anschlagmulde 12 hat. Deutlich wird, dass die Prägung 11 in die Anschlagmulde 12 eintaucht und einen Formschluss 9 bildet, wenn das Stromführungsprofil 5 auf der Auflageebene 3 des Metalltrogs 2 aufliegt und damit in den Metalltrog 2 eingebaut ist. Auf diese Weise wird die Hin- und Herbewegung des Stromführungsprofils 5 in Längserstreckungsrichtung L aber auch quer hierzu unterbunden oder zumindest eingeschränkt.

Die Prägung 11 mit der zugehörigen Anschlagmulde 12 ist im mittleren Bereich MB des Stromführungsprofils 5 vorhanden. Dieser mittlere Bereich MB befindet sich im dargestellten Ausführungsbeispiel etwa auf der halben Länge, d.h. auf 50% der Gesamtlänge des Stromführungsprofils 5 mit einer Toleranz von +/- 5%. Aufgrund des üblichen Längenausdehnungsverhaltens kann der Formschluss 9 aber auch an einer anderen Position im mittleren Bereich MB vorgesehen sein.

Die sich an dem mittleren Bereich MB anschließenden Endbereiche des Stromführungsprofils 5 sind hingegen in Längserstreckungsrichtung L beweglich, um auf diese Weise einen Längenausgleich zu gewährleisten. Dies kann beispielsweise durch Gleitlagerung des Stromführungsprofils 5 im Metalltrog 2 realisiert werden.

Der Formschluss 9 kann auch durch Verschrauben, Vernieten oder auf sonstige geeignete Weise realisiert werden, um auf diese Weise nicht nur eine Hin- und Herverschiebung in Längserstreckungsrichtung L zu verhindern, sondern auch eine Bewegung des Stromführungsprofils 5 in einer Richtung lotrecht zur Auflageebene 3 des Metalltrogs 2 im mittleren Bereich MB.

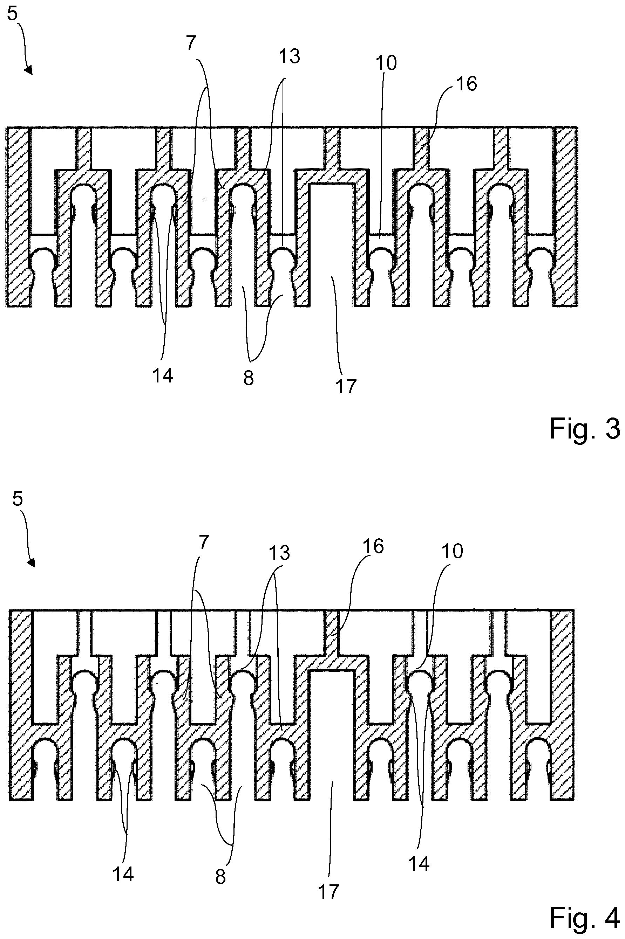

Figur 3 zeigt eine Querschnittsansicht des Stromführungsprofils 5. Hierbei wird deutlich, dass durch benachbarte, voneinander beabstandete Stege 7 jeweils eine Nut 8 gebildet wird. Auf diese Weise sind mehrere sich parallel zueinander erstreckende Nuten 8 nebeneinander angeordnet. In dem dargestellten Ausführungsbeispiel wechseln sich tiefere und niedrigere Nuten 8 alternierend ab. Bei den niedrigeren Nuten 8 ist der Nutgrund 13 näher an der oberen Nutöffnung positioniert als bei den tieferen Nuten 8. Die Nutöffnung ist an der Kontaktierungsseite angeordnet, wobei von der Kontaktierungsseite her die in den Nuten befindlichen elektrischen Leiter mit entsprechenden Abgriffselementen elektrisch kontaktiert werden.

Deutlich wird, dass an den Seitenwänden 7 benachbart zum Nutgrund 13 Vorsprünge 14 hineinragen. Diese Vorsprünge 14 sind einstückig aus den Seitenwänden 7 ausgebildet. Um dann diese Vorsprünge 14 beim Ausformen des Stromführungsprofils 5 mit einem Formwerkzeug auszuformen, sind Freimachungen 10 in dem Nutgrund 13 angrenzend an die jeweiligen Vorsprünge 14 vorhanden. Damit kann ein Formwerkzeug bis zu den Vorsprüngen 14 geführt werden.

Deutlich wird, dass in dem Schnittbereich der Freimachungen 10 für die niedrigeren Nuten 8 bei den tieferen Nuten 8 keine solche Freimachungen 10 vorhanden sind. Dort sind die Vorsprünge 14 mit den zugehörigen Freimachungen 10 in Längserstreckungsrichtung L des Stromführungsprofils 5 versetzt.

Zur Erhöhung des Abstandes der Nutgründe 13 der tieferen Nuten 8 zur Auflageebene des Stromführungsprofils 5 sind Lagerstege 16 an den die Nutgründe 13 bildenden Bodenabschnitte angeformt.

Deutlich wird weiterhin, dass im dargestellten Ausführungsbeispiel zwei Funktionsgruppen von nebeneinander angeordneten Nuten 8 vorhanden sind, die durch einen Zwischenraum 17 voneinander getrennt sind. Hier kann es sich beispielsweise um einerseits einen Bereich zur Stromführung und einen Bereich für Datenleitungen handeln, die räumlich durch die Zwischenräume 17 voneinander getrennt sind. Denkbar ist aber auch, dass unterschiedliche Stromkreise räumlich durch die Zwischenräume 17 voneinander getrennt werden.

Figur 4 zeigt eine Querschnittsdarstellung durch die das Stromführungsprofil 5 aus Figur 3 mit dem Schnitt im Bereich der tieferen Nuten 8. Es ist erkennbar, dass dort im Bereich der Vorsprünge 14, d.h. direkt oberhalb der einander gegenüberliegenden Vorsprünge einer tieferen Nut 8 eine Freimachung 10 in den Nutgrund 13 eingebracht ist. Entsprechend erstreckt sich diese Freimachung 10 auch durch den Lagersteg 16 bis zur Auflageebene des Stromführungsprofils 5.

## Patentansprüche

1. Stromschienenanordnung (1) mit einem sich in eine Längserstreckungsrichtung (L) erstreckenden Metalltrog (2) und mit sich ebenso in die Längserstreckungsrichtung (L) erstreckenden Stromführungsprofilen (5), die mehrere Nuten (8) haben, die sich parallel zu einander in Längserstreckungsrichtung (L) erstrecken und seitlich durch Stege (7) und im Nutgrund (13) durch einen die Stege (7) verbindenden Boden (6) begrenzt sind, wobei elektrische Leiter in den Nuten (8) aufgenommen und die Stromführungsprofile (5) in dem Metalltrog (2) eingebaut sind, **dadurch gekennzeichnet, dass** die Stromführungsprofile (5) innerhalb eines mittleren Bereichs (MB) von 30% bis 70% ihrer Länge durch Formschluss (9) mit dem Metalltrog (2) verbunden sind, wobei durch den Formschluss (9) ein Hin- und Herverschieben der Stromführungsprofile (5) in Längserstreckungsrichtung relativ zum Metalltrog (2) im mittleren Bereich (MB) der Stromführungsprofile (5) verhindert wird, und dass die Stromführungsprofile (5) an ihren sich an den mittleren Bereich (MB) anschließenden Bereichen in Längserstreckungsrichtung (L) relativ beweglich zum Metalltrog (2) sind, wobei im mittleren Bereich (MB) der Stromführungsprofile (5) nur eine Fixierung mit einem Formschluss (9) vorhanden ist, wobei der Formschluss (9) zur Fixierung axial mittig, d. h. etwa auf der halben Breite der Stromführungsprofile (5) erfolgt.

2. Stromschienenanordnung (1) nach Anspruch 1, **dadurch gekennzeichnet, dass** der Metalltrog (2) zumindest eine in Richtung des Stromführungsprofils (5) herausgestellte Prägung (11) und das Stromführungsprofil (5) eine zum Metalltrog (2) hin zugängliche Anschlagmulde (12) hat, wobei die Prägung (11) und die Anschlagmulde (12) zur Bildung des Formschlusses (9) ausgebildet sind, wenn das Stromführungsprofil (5) in den Metalltrog (2) eingebaut ist.

3. Stromschienenanordnung (1) nach Anspruch 2, **dadurch gekennzeichnet, dass** die Prägung (11) aus einer Auflageebene (3) herausgestellt ist.

4. Stromschienenanordnung (1) nach Anspruch 1, **dadurch gekennzeichnet, dass** das Stromführungsprofil (5) im mittleren Bereich (MB) mit dem Metalltrog (2) lösbar oder nicht lösbar verbunden ist.

5. Stromschienenanordnung (1) nach Anspruch 1, **dadurch gekennzeichnet, dass** der Metalltrog (2) eine zum Stromführungsprofil (5) hin offene Anschlagmulde (12) und das Stromführungsprofil (5) eine aus der Auflageebene (3) des Stromführungsprofils (5) in Richtung der Auflageebene (3) des Metalltrogs (2) herausgestellte Prägung (11) hat, wobei die Prägung (11) und die Anschlagmulde (12) zur Bildung des Formschlusses (9) ausgebildet sind, wenn das Stromführungsprofil (5) in den Metalltrog (2) eingebaut ist.

6. Stromschienenanordnung (1) nach Anspruch 5, **dadurch gekennzeichnet, dass** die Prägung (11) aus einer Auflageebene (3) des Stromführungsprofils (5) herausgestellt ist.

7. Stromschienenanordnung (1) nach einem der vorhergehenden Ansprüche, **dadurch gekennzeichnet, dass** die Stromführungsprofile (5) an einem stirnseitigen Endbereich eine Plattform zur Auflage eines stirnseitigen Endbereichs eines in Längserstreckungsrichtung (L) in einer Flucht angrenzenden weiteren Stromführungsprofils (5) haben.

8. Stromschienenanordnung (1) nach einem der vorhergehenden Ansprüche, **dadurch gekennzeichnet, dass** die Stromführungsprofile (5) an ihren diametral gegenüberliegenden Endbereichen einerseits eine Plattform und andererseits eine zur Aufnahme einer solchen Plattform angepasste Vertiefung haben.

9. Stromschienenanordnung (1) nach einem der Ansprüche 1 bis 7, **dadurch gekennzeichnet, dass** die Stromführungsprofile (5) an ihren diametral gegenüberliegenden Endbereichen jeweils eine Plattform zur Auflagerung eines Stromführungsprofil-Verbinders haben.

10. Stromschienenanordnung (1) nach einem der vorhergehenden Ansprüche,
**dadurch gekennzeichnet, dass** Lagerstege (16) von den Nutgrund (13) der Nuten (8) begrenzenden Böden (6) abragen, die eine Auflageebene zur Auflagerung auf dem Metalltrog (2) bilden.

11. Stromschienenanordnung (1) nach einem der vorhergehenden Ansprüche,
**dadurch gekennzeichnet, dass** Vorsprünge (14) von den Stegen (7) in die Nut (8) hineinragen, die zur Lagerung von in den Nuten (8) eingelegten elektrischen Leitern ausgebildet sind, und wobei der Boden (6) eine zu den Stegen (7) führende Freimachung (10) hat.

12. Stromschienenanordnung (1) nach Anspruch 11, **dadurch gekennzeichnet, dass** die Vorsprünge (14) durch ein in die jeweilige Freimachung (10) eintauchendes Formwerkzeug gebildet sind.

13. Stromschienenanordnung (1) nach Anspruch 11 oder 12, **dadurch gekennzeichnet, dass** die benachbarten Nuten (8) unterschiedlich tief sind.

14. Stromschienenanordnung (1) nach Anspruch 13, **dadurch gekennzeichnet, dass** von dem Boden (6) der tieferen Nuten (8) Lagerstege (16) abragen, die eine Auflageebene für einen Metalltrog (2) bilden.

15. Stromschienenanordnung (1) nach einem der Ansprüche 13 oder 14, **dadurch gekennzeichnet, dass** die Freimachungen (10) für die Vorsprünge (14) in den tieferen Nuten (8) in Längserstreckungsrichtung (L) versetzt zu den Freimachungen (10) für die Vorsprünge (14) in den niedrigeren Nuten (8) sind.

16. Stromschienenanordnung (1) nach einem der Ansprüche 11 bis 14, **dadurch gekennzeichnet, dass** die Freimachungen (10) benachbarter Nuten (8) für die Vorsprünge (14) in Längserstreckungsrichtung (L) versetzt zueinander sind.

## Claims

1. Conductor rail arrangement (1) with a metal trough (2) extending in a longitudinal direction (L) and with current guide profiles (5) which also extend in the longitudinal direction (L) and which have a plurality of grooves (8) which extend parallel to one another in the longitudinal direction (L) and are bounded laterally by webs (7) and in the groove base (13) by a base (6) connecting the webs (7), electrical conductors being accommodated in the grooves (8) and the current-carrying profiles (5) being installed in the metal trough (2), **characterized in that** the current-carrying profiles (5) are connected to the metal trough (2) within a central region (MB) of 30 % to 70 % of their length by form fit (9), wherein the form fit (9) prevents the current guiding profiles (5) from being displaced to and fro in the longitudinal direction relative to the metal trough (2) in the middle region (MB) of the current guiding profiles (5), and **in that** the current guiding profiles (5) are movable relative to the metal trough (2) in the direction of longitudinal extension (L) in their regions adjoining the central region (MB), wherein only one fixing with a form fit (9) is present in the central region (MB) of the current guiding profiles (5), wherein the form fit (9) for fixing is axially central, i.e. approximately half the width of the current guiding profiles (5).

2. Conductor rail arrangement (1) according to claim 1, **characterised in that** the metal trough (2) has at least one embossing (11) protruding in the direction of the current guide profile (5) and the current guide profile (5) has a stop recess (12) accessible towards the metal trough (2), the embossing (11) and the stop recess (12) being designed to form the form fit (9) when the current guide profile (5) is installed in the metal trough (2).

3. Conductor rail arrangement (1) according to claim 2, **characterised in that** the embossing (11) is protruding from a support plane (3).

4. Conductor rail arrangement (1) according to claim 1, **characterised in that** the conductor rail profile (5) is detachably or non-detachably connected to the metal trough (2) in the central region (MB).

5. Conductor rail arrangement (1) according to claim 1, **characterized in that** the metal trough (2) has a stop trough (12) open towards the current-carrying profile (5) and the current-carrying profile (5) has an embossment (11) protruding from the support plane (3) of the current-carrying profile (5) in the direction of the support plane (3) of the metal trough (2), wherein the embossment (11) and the stop recess (12) are designed to form the form fit (9) when the current-carrying profile (5) is installed in the metal trough (2).

6. Conductor rail arrangement (1) according to claim 5, **characterised in that** the embossing (11) is protruding from a support plane (3) of the conductor rail profile (5).

7. Conductor rail arrangement (1) according to one of the preceding claims, **characterised in that** the conductor rail profiles (5) have a platform at a front end region for supporting a front end region of a further conductor rail profile (5) adjoining in alignment in the longitudinal direction (L).

8. Conductor rail arrangement (1) according to one of the preceding claims, **characterised in that** the conductor rail profiles (5) have at their diametrically opposite end regions on the one hand a platform and on the other hand a recess adapted to receive such a platform.

9. Conductor rail arrangement (1) according to one of claims 1 to 7, **characterised in that** the conductor rail profiles (5) each have a platform at their diametrically opposite end regions for supporting a conductor rail profile connector.

10. Conductor rail arrangement (1) according to one of the preceding claims, **characterised in that** bearing webs (16) project from the bases (6) bounding the groove bottoms (13) of the grooves (8), which form a support plane for support on the metal trough (2).

11. Conductor rail arrangement (1) according to one of the preceding claims, **characterised in that** projections (14) project from the webs (7) into the groove (8), which projections are designed for the mounting of electrical conductors inserted in the grooves (8), and wherein the base (6) has a clearance (10) leading to the webs (7).

12. Busbar arrangement (1) according to claim 11, **characterised in that** the projections (14) are formed by a moulding tool plunging into the respective clearance (10).

13. Conductor rail arrangement (1) according to claim 11 or 12, **characterised in that** the adjacent grooves (8) are of different depths.

14. Conductor rail arrangement (1) according to claim 13, **characterised in that** bearing webs (16) project from the bottom (6) of the deeper grooves (8) and form a support plane for a metal trough (2).

15. Conductor rail arrangement (1) according to one of claims 13 or 14, **characterised in that** the clearances (10) for the projections (14) in the deeper grooves (8) are offset in the longitudinal direction (L) relative to the clearances (10) for the projections (14) in the lower grooves (8).

16. Conductor rail arrangement (1) according to any one of claims 11 to 14, **characterised in that** the clearances (10) of adjacent grooves (8) for the projections (14) are offset from one another in the longitudinal direction (L).

## Revendications

1. Ensemble de rail conducteur (1) comprenant un bac métallique (2) s'étendant dans une direction d'extension longitudinale (L) et des profilés d'amenée de courant (5) s'étendant également dans la direction d'extension longitudinale (L) et présentant plusieurs rainures (8) qui s'étendent parallèlement les unes aux autres dans la direction d'extension longitudinale (L) et qui sont délimitées latéralement par des entretoises (7) et, dans le fond de rainure (13), par un fond (6) reliant les entretoises (7), des conducteurs électriques étant logés dans les rainures (8) et les profilés d'amenée de courant (5) étant montés dans le bac métallique (2), **caractérisé en ce que**, à l'intérieur d'une zone centrale (MB) de 30 % à 70 % de leur longueur, les profilés d'amenée de courant (5) sont reliés au bac métallique (2) par une liaison par complémentarité de forme (9), la liaison par complémentarité de forme (9) empêchant un mouvement en va-et-vient des profilés d'amenée de courant (5) par rapport au bac métallique (2) dans la direction d'extension longitudinale, dans la zone centrale (MB) des profilés d'amenée de courant (5),
et **en ce qu'**au niveau de leurs zones se raccordant à la zone centrale (MB), les profilés d'amenée de courant (5) sont mobiles par rapport au bac métallique (2) dans la direction d'extension longitudinale (L),
dans la zone centrale (MB) des profilés d'amenée de courant (5), il existe seulement une fixation avec une liaison par complémentarité de forme (9),
la liaison par complémentarité de forme (9) de fixation est réalisée axialement au centre, c'est-à-dire à mi-largeur des profilés d'amenée de courant (5).

2. Ensemble de rail conducteur (1) selon la revendication 1,
**caractérisé en ce que** le bac métallique (2) présente au moins une empreinte (11) faisant saillie en direction du profilé d'amenée de courant (5), et le profilé d'amenée de courant (5) présente une cavité de butée (12) accessible vers le bac métallique (2), l'empreinte (11) et la cavité de butée (12) étant conçues pour constituer la liaison par complémentarité de forme (9) lorsque le profilé d'amenée de courant (5) est monté dans le bac métallique (2).

3. Ensemble de rail conducteur (1) selon la revendication 2,
**caractérisé en ce que** l'empreinte (11) fait saillie d'un plan d'appui (3).

4. Ensemble de rail conducteur (1) selon la revendication 1,
**caractérisé en ce que** dans la zone centrale (MB), le profilé d'amenée de courant (5) est relié de manière amovible ou non amovible au bac métallique (2).

5. Ensemble de rail conducteur (1) selon la revendication 1,
**caractérisé en ce que** le bac métallique (2) présente une cavité de butée (12) ouverte vers le profilé d'amenée de courant (5), et le profilé d'amenée de courant (5) présente une empreinte (11) faisant saillie du plan d'appui (3) du profilé d'amenée de courant (5) en direction du plan d'appui (3) du bac métallique (2), l'empreinte (11) et la cavité de butée (12) étant conçues pour constituer la liaison par complémentarité de forme (9) lorsque le profilé d'amenée de courant (5) est monté dans le bac métallique (2).

6. Ensemble de rail conducteur (1) selon la revendication 5,
**caractérisé en ce que** l'empreinte (11) fait saillie d'un plan d'appui (3) du profilé d'amenée de courant (5).

7. Ensemble de rail conducteur (1) selon l'une des revendications précédentes,
**caractérisé en ce que** les profilés d'amenée de courant (5) présentent, dans une zone d'extrémité côté frontal, une plateforme destinée à supporter une zone d'extrémité côté frontal d'un autre profilé d'amenée de courant (5) adjacent en alignement dans la direction d'extension longitudinale (L).

8. Ensemble de rail conducteur (1) selon l'une des revendications précédentes,
**caractérisé en ce que**, au niveau de leurs zones d'extrémité diamétralement opposées, les profilés d'amenée de courant (5) comportent d'une part une plateforme et d'autre part un renfoncement adapté pour recevoir une telle plateforme.

9. Ensemble de rail conducteur (1) selon l'une des revendications 1 à 7,
**caractérisé en ce que**, au niveau de leurs zones d'extrémité diamétralement opposées, les profilés d'amenée de courant (5) comportent chacun une plateforme destinée à supporter un connecteur de profilé d'amenée de courant.

10. Ensemble de rail conducteur (1) selon l'une des revendications précédentes,
**caractérisé en ce que** des entretoises d'appui (16) dépassent des fonds (6), délimitant le fond (13) des rainures (8), qui constituent un plan d'appui pour l'appui sur le bac métallique (2).

11. Ensemble de rail conducteur (1) selon l'une des revendications précédentes,
**caractérisé en ce que** des saillies (14) dépassent depuis les entretoises (7) jusque dans la rainure (8), qui sont réalisées pour supporter des conducteurs électriques insérés dans les rainures (8), le fond (6) présentant un dégagement (10) menant vers les entretoises (7).

12. Ensemble de rail conducteur (1) selon la revendication 11,
**caractérisé en ce que** les saillies (14) sont constituées par un outil de formage plongeant dans le dégagement (10) correspondant.

13. Ensemble de rail conducteur (1) selon la revendication 11 ou 12,
**caractérisé en ce que** les rainures (8) voisines ont des profondeurs différentes.

14. Ensemble de rail conducteur (1)) selon la revendication 13,
**caractérisé en ce que** des entretoises de support (16) dépassent du fond (6) des rainures plus profondes (8), qui constituent un plan d'appui pour un bac métallique (2).

15. Ensemble de rail conducteur (1) selon l'une des revendications 13 ou 14, **caractérisé en ce que** les dégagements (10) destinés aux saillies (14) dans les rainures plus profondes (8) sont décalés dans la direction d'extension longitudinale (L) par rapport aux dégagements (10) destinés aux saillies (14) dans les rainures moins profondes (8).

16. Ensemble de rail conducteur (1) selon l'une des revendications 11 à 14,
**caractérisé en ce que** les dégagements (10) destinés aux saillies (14) de rainures (8) voisines sont décalés les uns par rapport aux autres dans la direction d'extension longitudinale (L).
